# EUROPEAN PATENT APPLICATION

(11) **EP 3 121 530 A1**
(43) Date of publication of application: **25.01.2017**
(21) Application number: 15178107.7
(22) Date of filing: 23.07.2015
(51) Int. Cl.: F24J 2/14, F24J 2/52

(54) **TORQUE TUBE OF A SUPPORT STRUCTURE FOR SUPPORTING A MIRROR; SOLAR COLLECTOR ASSEMBLY WITH THE SUPPORT STRUCTURE AND USE OF THE SOLAR COLLECTOR ASSEMBLY FOR SOLAR FIELD**

(71) Applicant: Siemens Concentrated Solar Power Ltd., 48091 Rosh Ha ayin (IL)
(72) Inventor: Sharon, Yigal, 90805 Mevaseret Zion (IL)
(74) Representative: Maier, Daniel Oliver

(57) **Abstract**

A torque tube (10) of a support structure (1) for supporting at least one reflector (2) for reflecting sunlight (3) is provided. The torque tube (10) comprises following limitations: The torque tube (10) comprises at least one first external torque tube surface (101). The torque tube (10) comprises at least one second external torque tube surface (102). Each of the external torque tube surfaces (101, 102) comprises at least one lug (1011, 1021) for frictional connections of the torque tube (10) with the support structure (1). Each of the lugs (1011, 1021) protrudes the respective external torque tube surface (101, 102). In addition, the lugs (1011, 1021) are connected directly to each other. The lugs (1011, 1021) form a single elongated piece. In addition, a solar collector assembly (2000) with at least one support structure (1) for supporting at least one reflector (2) for reflecting sunlight (3) is provided, wherein the support structure (1) comprises at least one of that torque tube (10). Finally, a use of the solar collector assembly for a solar field of solar thermal power plant for converting solar energy into electrical energy is provided. With the solar field solar radiation is collected by the solar collector assemblies, transferred into thermal energy for generating steam with which a stream turbine is driven for producing electricity.

## Description

### BACKGROUND OF THE INVENTION

### 1. Field of the Invention

This invention relates to a torque tube of a support structure for supporting a reflector for reflecting sunlight, a solar collector assembly with the support structure of a solar collector assembly and a use of the solar collector assembly.

### 2. Description of the Related Art

A solar field is a modular distributed system of solar collector assemblies (SCA) connected to each other via a system of pipes. The SCA comprises a sunlight reflecting arrangement with at least one reflector (mirror) for reflecting sunlight and with at least one reflector holders (support support structure) for holding the reflector. For instance, the reflector is a bent reflector with a parabolic shape. The reflectors and the reflector holders are connected together by gluing connection pads.

Solar radiation is focused by the parabolic reflector onto a heat collection element which is arranged in a focal line of the parabolic reflector. The heat collecting element comprises a hollow tube (heat receiver tube) through which a heat transfer fluid (HTF) is circulated. Via the heat receiver tube solar energy is absorbed. The absorbed energy is transferred to the heat transfer fluid, e.g. a thermo-oil. Via the heat transfer fluid the transferred (thermal) energy is transported to a heat exchanger where steam is generated. The steam is used to drive a turbine which is connected to a generator. By the generator electric energy is produced.

Solar reflecting arrangements are key elements of the solar field. Core of the reflector support structure is a torque tube. Via rotation of this torque tube a movement of the support structure and hence a movement of the reflector towards the sun is carried out. For that, frictional connections between the torque tube and the support structure are realized with the aid of lugs which are welded at an external surface of the torque tube. This type of connection requires a torque tube with thick torque tube wall. Additionally, supporting ribs are necessary.

### SUMMARY OF THE INVENTION

It is an objective of the invention to provide a torque tube for sunlight reflecting arrangement, which is more reliable compared to the state of the art.

Further objectives of the invention are the providing of a respective solar collector assembly and a use of the solar collector assembly.

These objects are achieved by the inventions specified in the claims.

A torque tube of a support structure for supporting at least one reflector for reflecting sunlight is provided. The torque tube comprises following limitations: The torque tube comprises at least one first external torque tube surface. The torque tube comprises at least one second external torque tube surface. Each of the external torque tube surfaces comprises at least one lug for frictional connections of the torque tube with the support structure. Each of the lugs protrudes the respective external torque tube surface. In addition, the lugs are connected directly to each other.

In addition, a solar collector assembly with at least one support structure for supporting at least one reflector for reflecting sunlight is provided, wherein the support structure comprises at least one of that torque tube.

A shape of the reflector can be different. In an embodiment the reflector is selected from the group existing of a flat reflector and a bent reflector with a reflector bending. The reflector bending comprises preferably a parabolic shape. More preferably the reflector bending is a permanent reflector bending. The resulting sunlight reflecting arrangement is used for a solar collector assembly with a parabolic trough.

The reflector can comprise different, sunlight reflecting materials. The reflector can just consist of a body out of reflecting material.

Alternatively the reflector comprises a reflector substrate on which a thin sunlight reflecting layer is attached. For instance the sunlight reflecting layer comprises silver. The reflector substrate can consist of different organic or inorganic materials.

In an embodiment the reflector substrate comprises glass. The reflector substrate is a glass sheet, onto which the sunlight reflecting layer is attached. Thereby the reflector can act as a front surface mirror or as a back surface mirror.

The glass sheet can be flat resulting in a flat reflector. Preferably the glass sheet comprises a permanent parabolic bending resulting in a bent reflector. For instance, the bent reflector comprises a parabolic shape. For introducing the bending there are different ways possible. Preferably a cold or a hot bending of the glass sheet (with annealing the glass sheet) and/or of the reflector can be carried out. Hence in a further preferred embodiment the bent reflector is selected from the group existing of a cold bent reflector and a hot bent reflector.

Finally, a use of the solar collector assembly for a solar field of solar thermal power plant for converting solar energy into electrical energy is provided. With the solar field solar radiation is collected by the solar collector assemblies, transferred into thermal energy for generating steam with which a stream turbine is driven for producing electricity.

The torque tube can be solid. The torque tube is preferably a hollow torque tube with a torque tube interior. Preferably, the hollow torque tube comprises a torque tube wall with a thickness which is selected from the range from 2 cm to 5 cm. This torque tube wall forms - inter alia - the external torque tube surfaces.

There are at least two lugs which are arranged at different areas of the torque tube surface. The lugs are firmly connected to the respective surface such that a mechanical force can be transferred from the torque tube to the support structure and vice versa via the lugs. There is no piece between the lugs. The lugs form one piece. The result is a strong and robust torque tube with which a rotation movement of the reflector which is supported by the support structure can be performed.

Preferably, at least one of the lugs is inserted into a slot of the respective external torque tube surface. Most preferably, both lugs are inserted into slots of the respective external torque tube surfaces. The insertion of the lugs into slots is a relatively cheap and easy solution.

In a preferred embodiment, the external torque tube surfaces are diametrically opposed to each other. By this, the points of attack of the mechanical force are diametrically arranged and hence, the reliable rotation movement of torque tube around its longitudinal axis is possible.

The lugs are connected together directly. The lugs form a single piece. Preferably, the lugs form a single, elongated piece. For instance, this single, elongated piece is extended through the torque tube interior of a hollow torque tube. The single piece is preferably a stiffening part of the torque tube. Such an embodiment is very robust and strong, especially in connection with an embodiment wherein the lugs are arranged diametrically to each other.

Summarizing following advantages are provided by the invention:
- The invention provides an easy and reliable torque tube of a support structure of a solar collector assembly.
- The long lugs optimize the loads distribution from the support structure to the torque tube and reduce the stress in the welded joints of the torque tube and the support structure.
- Lengths of the welds are shorter in comparison to the state of the art. This fact reduces the torque tube distortion during a galvanize process of the torque tube. In a addition, this reduces the manufacturing costs for the torque tube.
- The torque tube wall of the torque tube can be thinner in comparison to known torque tube wall of torque tubes of the state of the art. This reduces the material cost for the torque tube.
- The high rigidity of the joints improves the optical efficiency of the resulting solar collector assembly.
- The torque tube show a high durability to buckling.
- With the invention a full-automatic production is possible, too. For instance, one piece can easily be inserted automatically into slots of the torque tube.

### BRIEF DESCRIPTION OF THE SCHEMATIC DRAWINGS

Further features and advantages of the invention are produced from the description of a exemplary embodiments with reference to the drawings. The drawings are schematic.

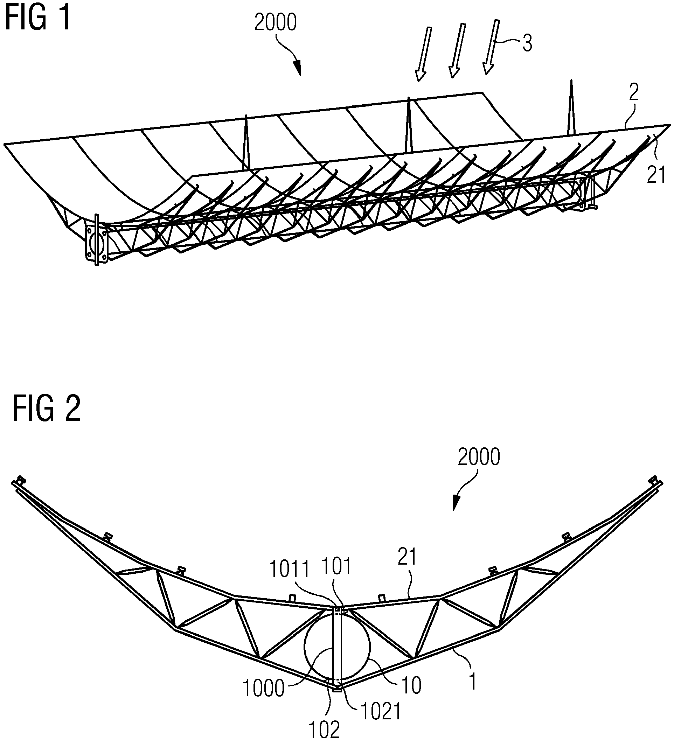

Figure 1 shows a solar collector assembly in a perspective view.
Figure 2 shows a cross section of the solar collector assembly.

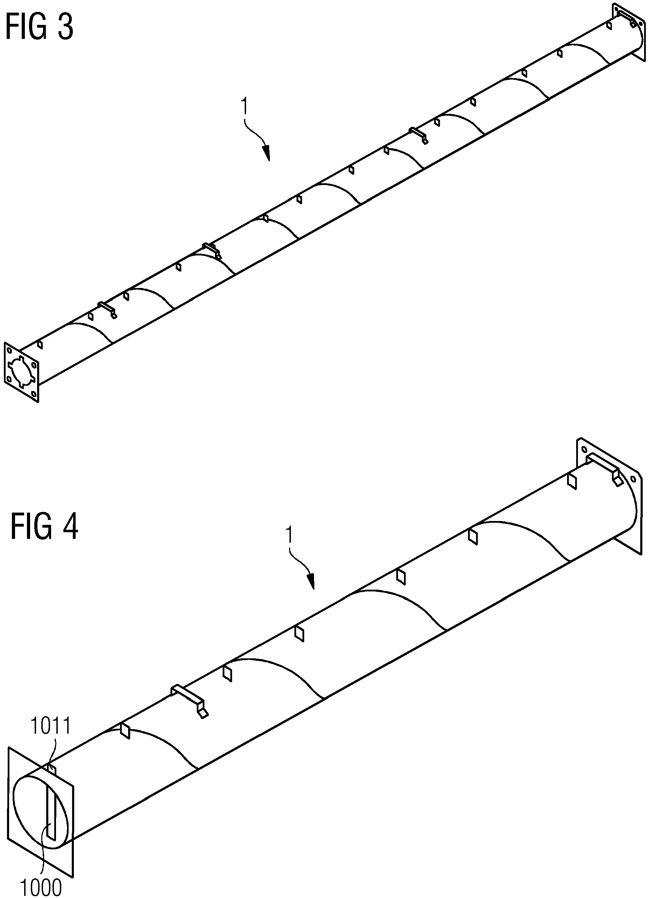

Figure 3 shows a torque tube in a perspective view.
Figure 4 shows a torque tube in a perspective view.
Figure 5 shows the cross section of figure 2 with the attacking mechanical forces.
Figure 6 shows a torque tube in a cross section.
Figure 7 shows a torque tube concerning state of the art in a cross section.

Subject matter is a torque tube 10 of a support structure 1 for supporting at least one reflector 2 for reflecting sunlight 3.

The reflector 2) is a bent reflector with a reflector bending (21). The reflector is a parabolic mirror. With the aid of the reflector sunlight is directed to the focal line of the parabolic mirror. The result is a solar collector assembly 2000, wherein the reflector bending 21 comprises a parabolic shape.

The torque tube 10 is a component of the support structure 10. The torque tube 10 comprises front external torque tube surface 101 and rear external torque tube surface 102.

Each of the external torque tube surfaces 101 and 102 comprises at least one lug 1011 and 1021 for (pin) connections of the torque tube 10 with the support structure(reflector holder) 1.

Each of the lugs 1011 and 1021 protrudes the respective external torque tube surface 101 and 102.

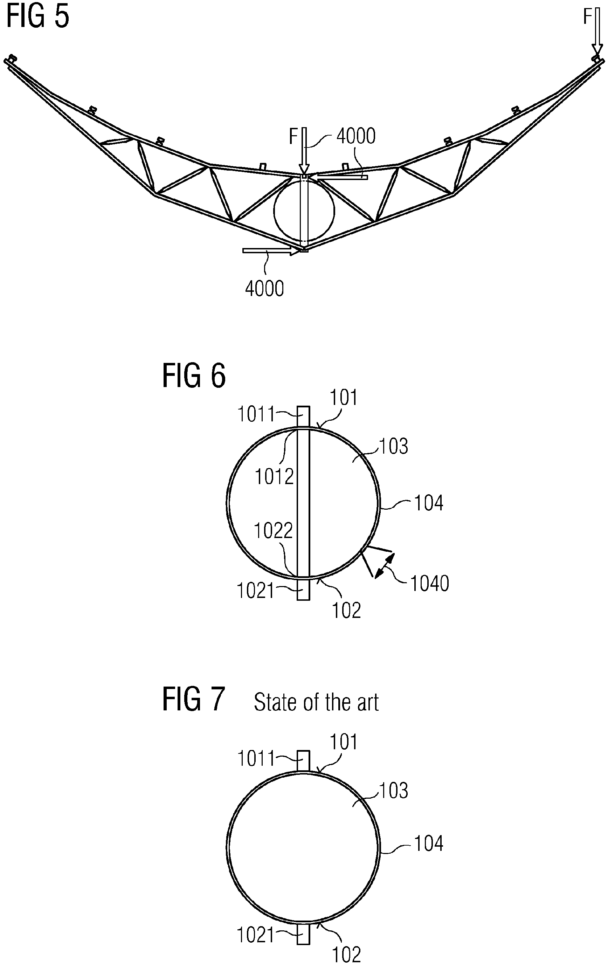

The lugs 1011 and 1021 are connected directly to each other. In contrast to that, concerning the state of the art, the lugs 1011 and 1021 are not directly connected to each other (figure 7).

The torque tube 10 is a steel torque tube. In addition, the torque tube is a hollow torque tube with a torque tube interior 103. The hollow torque tube comprises a torque tube 104 wall with a thickness of 5 cm.

The lugs 1011 and 1021 are inserted into respective slot 1012 and 1022 of the respective external torque tube surface 101 and 102.

The external torque tube surfaces 101 and 102 are diametrically opposed to each other. In addition, the lugs 1011 and 1021 form a single, elongated piece 1000. This single piece is a stiffening part of the torque tube 10.

Figure 5 shows the solar collector assembly with the attacking forces 4000. Due to the enhanced stability of the torque tube 10 the support structure can withstand the attacking forces 4000.

The resulting solar collector assembly with the support structure 1 with the torque tube and the reflector 2 is used for a (not shown) solar field. With the aid of the solar field solar energy is collected. The collected solar energy is transferred into thermal energy with a heat transfer fluid. This heat transfer fluid is used for the generation of steam. With the aid of the steam a steam turbine is driven for producing electricity. So, the solar collector assembly is used in a solar field of a solar thermal power plant for converting solar energy into electrical energy

## Claims

1. Torque tube (10) of a support structure (1) for supporting at least one reflector (2) for reflecting sunlight (3) with following limitations:
- The torque tube (10) comprises at least one first external torque tube surface (101);
- The torque tube comprises at least one second external torque tube surface (102); and
- Each of the external torque tube surfaces (101, 102) comprises at least one lug (1011, 1021) for frictional connections of the torque tube (10) with the support structure (1); wherein
- Each of the lugs (1011 and 1021) protrudes the respective external torque tube surface (111, 112) and
- the lugs 1011 and 1021) are connected directly to each other.

2. Torque tube according to claim 1, wherein the torque tube (10) is a hollow torque tube with a torque tube interior (103).

3. Torque tube according to claim 2, wherein the hollow torque tube comprises a torque tube wall (104) with a thickness (1040) which is selected from the range from 2 cm to 5 cm.

4. Torque tube according to one of the claims 1 to 3, wherein at least one of the lugs (1011, 1021) is inserted into a slot (1012, 1022) of the respective external torque tube surface (101, 102).

5. Torque tube according to one of the claims 1 to 4, wherein the external torque tube surfaces (101, 102) are diametrically opposed to each other.

6. Torque tube according to one of the claims 1 to 5 to claim 3, wherein the lugs (1011, 1021) form a single, elongated piece (1000).

7. Torque tube according to claim 6, wherein the single piece is a stiffening part of the torque tube (10).

8. Solar collector assembly (2000) with at least one support structure (1) for supporting at least one reflector (2) for reflecting sunlight (3), wherein the support structure (1) comprises at least one torque tube (10) according to one of the claims 1 to 7.

9. Solar collector assembly (2000) according to claim 8, wherein the reflector (2) is selected from the group consisting of a flat reflector and a bent reflector with a reflector bending (21).

10. Solar collector assembly (2000) according to claim 9, wherein the reflector bending (21) comprises a parabolic shape.

11. Use of the solar collector assembly according to one of the claims 8 to 10 for a solar field of solar thermal power plant for converting solar energy into electrical energy.
